# EUROPÄISCHE PATENTSCHRIFT

(11) **EP 0 772 664 B1**
(45) Veröffentlichungstag und Bekanntmachung des Hinweises auf die Patenterteilung: **28.04.1999**
(21) Anmeldenummer: 95926917.6
(22) Anmeldetag: 18.07.1995
(51) Int. Cl.: C10L 1/22, C10M 133/52, C10M 133/54, C08F 8/30, C08F 8/32, C10N 60/00

(54) **HYDRIERTE UMSETZUNGSPRODUKTE AUS POLYOLEFINEN UND STICKOXIDEN ODER GEMISCHEN AUS STICKOXIDEN UND SAUERSTOFF UND IHRE VERWENDUNG ALS ADDITIVE FÜR KRAFTSTOFFE UND SCHMIERSTOFFE.**
HYDROGENATED REACTION PRODUCTS OF POLYOLEFINS AND NITROGEN OXIDES OR MIXTURES OF NITROGEN OXIDES AND OXYGEN AND THEIR USE AS ADDITIVES FOR FUELS OR LUBRICANTS
PRODUITS HYDROGENES DE REACTION DE POLYOLEFINES ET D'OXYDES D'AZOTE OU DE MELANGES D'OXYDES D'AZOTE ET D'OXYGENE ET L'UTILISATION DE TELS PRODUITS EN TANT QU'ADDITIFS POUR CARBURANTS OU LUBRIFIANTS

(30) Priorität: 21.07.1994 DE 4425835
(43) Veröffentlichungstag der Anmeldung: 14.05.1997
(73) Patentinhaber: BASF AKTIENGESELLSCHAFT, 67056 Ludwigshafen (DE)
(72) Erfinder: KROPP, Rudolf, D-67117 Limburgerhof (DE); HICKMANN, Eckhard, D-67125 Dannstadt-Schauernheim (DE); EBEL, Klaus, D-68623 Lampertheim (DE); GÜNTHER, Wolfgang, D-67582 Mettenheim (DE); RATH, Hans, Peter, D-67269 Grünstadt (DE); SCHWAHN, Harald, D-69168 Wiesloch (DE)
(86) Internationale Anmeldenummer: EP9502803
(87) Internationale Veröffentlichungsnummer: WO9603479

(56) Entgegenhaltungen:
- BE-A- 652 991
- DE-A- 3 611 230
- FR-A- 1 437 041
- FR-A- 2 687 159
- GB-A- 1 010 410
- US-A- 3 282 983
- US-A- 3 449 437
- US-A- 3 510 531
- US-A- 3 576 742
- US-A- 3 681 463
- US-A- 3 689 561
- US-A- 3 799 751

## Beschreibung

Die vorliegende Erfindung betrifft Umsetzungsprodukte aus Polymerisaten von Propen, 1-Buten, 2-Buten, Isobuten, 1,3-Butadien oder Mischungen hieraus oder von Isobuten, wobei bis zu 50 Gew.-% des Isobutens durch andere C₂- bis C₆-Olefine als Comonomere ersetzt sein können, mit einem mittleren Polymerisationsgrad P = 5 bis 100 und Stickoxiden oder Gemischen aus Stickoxiden und Sauerstoff, welche im Anschluß an ihre Bildung durch Hydrierung hauptsächlich in Aminoalkane der Strukturen XIX, XXI, XXIII und/oder XXV 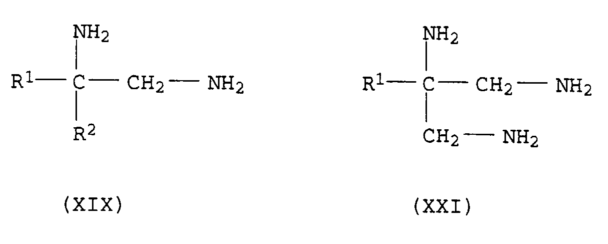 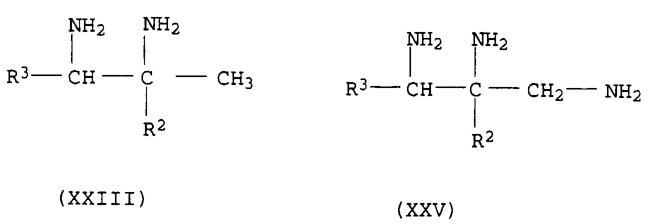 umgewandelt worden sind, wobei
- R¹: einen langkettigen linearen oder verzweigten Alkylrest mit 8 bis 600 C-Atomen bezeichnet,
- R²: für Wasserstoff oder C₁- bis C₃-Alkyl steht und
- R³: einen um ein Kohlenstoffatom oder eine CH₂-Gruppe verkürzten Rest R¹ darstellt.

Weiterhin betrifft die Erfindung deren Verwendung als Additive für Kraftstoffe und für Schmierstoffe sowie diese Additive enthaltende Kraftstoffe für Ottomotoren und Schmierstoffe.

Vergaser und Einlaßsystem von Ottomotoren, aber auch Einspritzsysteme für die Kraftstoffdosierung in Otto- und Dieselmotoren, werden durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Die Rückstände verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgase größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen verwendet werden (M. Rossenbeck in Katalysatoren, Tenside, Mineralöladditive, Hrsg. J. Falbe, U. Hasserodt, S. 223 f., G. Thieme Verlag, Stuttgart, 1978).

Je nach Wirkungsweise, aber auch nach dem bevorzugten Wirkort solcher Detergents-Additive unterscheidet man heute zwei Generationen derartiger Hilfsmittel.

Die erste Additiv-Generation konnte nur die Bildung von Ablagerungen im Ansaugsystem verhindern, nicht aber bereits vorhandene Ablagerungen wieder entfernen, wohingegen die Additive der zweiten Generation beides bewirken können ("keep-clean-" und "clean-up-Effekt") und zwar aufgrund ihrer hervorragenden Thermostabilität, insbesondere auch an Zonen höherer Temperaturen, nämlich an den Einlaßventilen.

Das molekulare Bauprinzip von Kraftstoff-Detergentien kann verallgemeinernd angegeben werden als Verknüpfung polarer Strukturen mit meist höhermolekuaren, unpolaren oder lipophilen Resten.

Vertreter der zweiten Additiv-Generation sind oft Produkte auf der Basis von Polyisobutenen im unpolaren Molekülteil. Hier wieder sind Additive vom Polyisobutylamin-Typ besonders hervorzuheben.

In der US-A 3 576 742 (1) werden Umsetzungsprodukte aus verzweigten langkettigen aliphatischen Olefinen, beispielsweise Polypropylen, Polyisobutylen oder Copolymeren aus Ethylen und Isobutylen, und Stickoxiden als Detergentien für Schmierstoffe beschrieben.

In der US-A 3 681 463 wird die Umsetzung von Polypropenen und Polybutenen mit Distickstofftetroxid in einem inerten Trägergas wie Kohlendioxid oder Stickstoff beschrieben. Aus den so erhaltenen Umsetzungsprodukten durch anschließende Reduktion hergestellte Hydroxylalkylamine können als Mineralöladditive verwendet werden.

Der vorliegenden Erfindung lag die Aufgabe zugrunde, Kraftstoffadditive, vor allem für Kraftstoffe für Ottomotoren, mit verbesserter Wirkung bereitzustellen. Dabei sollte insbesondere ausgehend von einem Polyolefin in einer einfachen, möglichst einstufigen Reaktion ein Polyolefin-Derivat hergestellt werden, das als Kraftstoffadditiv verwendet werden kann und das gut kontrollierbar und reproduzierbar herzustellen ist.

Demgemäß wurden die eingangs definierten Umsetzungsprodukte gefunden.

Eine besonders bevorzugte Ausführungsform bilden Umsetzungsprodukte, welche auf Polymerisaten von Isobuten basieren, wobei bis zu 50 Gew.-%, vorzugsweise bis zu 30 Gew.-% des Isobutens durch andere C₂- bis C₆-Olefine, insbesondere durch Propen, 1-Buten, 2-Buten oder 1,3-Butadien oder einer Mischung hieraus, als Comonomere ersetzt sein können.

Die Polymerisation der genannten Olefine erfolgt in der Regel nach üblichen Methoden. Die Polymerisate weisen aufgrund von Kettenabbruchreaktionen endständige (α-ständige), β-ständige und innerständige Doppelbindungen auf, wobei die β-ständigen und insbesondere die endständigen Doppelbindungen die Reaktionszentren für die Umsetzung mit den Stickoxiden darstellen.

Der mittlere Polymerisationsgrad P liegt bei 5 bis 100, vorzugsweise 8 bis 80, insbesondere 10 bis 60, vor allem 15 bis 40. Wie stets bei derartigen Polymerisationen erhält man Polymere mit einem bestimmten Polymerisationsgradspektrum. Die Streuung ist jedoch im Hinblick auf die Eigenschaften der Umsetzungsprodukte mit Stickoxiden bzw. Stickoxid-Sauerstoff-Gemischen ohne erkennbaren Einfluß, so daß es nur auf den mittleren Polymerisationsgrad P ankommt, der beispielsweise durch Viskositätsmessungen auch während der Polymerisation laufend ermittelt und gesteuert werden kann.

In Korrelation mit dem mittleren Polymerisationsgrad P weisen die beschriebenen Polyolefine Kohlenstoffzahlen von 10 bis ca. 600, vorzugsweise 24 bis ca. 320, insbesondere 40 bis ca. 240, und mittlere Molekulargewichte (zahlengemittelt) von 140 bis 8400, vorzugsweise 330 bis 4500, insbesondere 560 bis 3400, auf.

Für die Umsetzung zu den beschriebenen Produkten kommen als Stickoxide vor allem Stickstoffmonoxid (NO), Stickstoffdioxid (NO₂), Distickstofftrioxid (N₂O₃), Distickstofftetraoxid (N₂O₄), Gemische dieser Stickoxide untereinander sowie Gemische dieser Stickoxide mit Sauerstoff, insbesondere NO mit Sauerstoff und NO₂ mit Sauerstoff, in Betracht. Bei Mitverwendung von Sauerstoff macht dieser im Gemisch mit den Stickoxiden 1 bis 70 Vol.-%, insbesondere 5 bis 50 Vol.-% aus. Das Stickoxid-Sauerstoff-Gemisch kann auch noch Inertgase, z.B. Stickstoff, enthalten; dies tritt beispielsweise auf, wenn man Stickoxid-Luft-Gemische verwendet.

Die Umsetzung zu den beschriebenen Produkten kann drucklos oder unter Druck, diskontinuierlich oder kontinuierlich durchgeführt werden.

Um einen quantitativen Umsatz zu erzielen, werden die Stickoxide im Molverhältnis Polyolefine zu Stickoxid von 1 : 2 bis 1 : 4, vorzugsweise 1 : 2,2 bis 1 : 3,3 zugegeben. Ein größerer Überschuß schadet nicht.

Die Temperatur ist unkritisch. Sie kann im Bereich von -30° bis 150°C variiert werden. Bevorzugt arbeitet man bei -10° bis 100°C, insbesondere bei 25°C bis 80°C.

Die Umsetzung wird in vorteilhafter Weise in einem inerten organischen Lösungsmittel durchgeführt. Dafür eignen sich beispielsweise aliphatische Kohlenwasserstoffe wie Isooctan oder ein n-Alkan-Gemisch (z.B. C₁₀-C₁₃), chlorierte Kohlenwasserstoffe wie Methylenchlorid, Tetrachlorkohlenstoff oder Chlorbenzol, Ether wie Diethylether, Tetrahydrofuran, Dioxan oder tert.-Butylmethylether, Ester wie Essigsäureethylester oder Benzoesäuremethylester, Amide wie Dimethylformamid oder N-Methylpyrrolidon sowie Säuren wie Essigsäure. Im allgemeinen betragen die Lösungsmittelmengen 50 bis 90 Gew.-% des Gesamtansatzes. Es kann aber auch ohne Lösungsmittel gearbeitet werden.

Der Zusatz einer geringen Menge Wasser (etwa 0,2 bis 1 Gew.-%, bezogen auf eingesetztes Polyolefin), um eventuell gebildeten Nitritester zu hydrolysieren, schadet nicht.

Die Aufarbeitung eines Reaktionsansatzes geschieht meist in der Weise, daß entweder kurz im Vakuum auf 40 bis 50°C erhitzt oder mit Wasser gerührt und anschließend eine Phasentrennung vorgenommen wird. Beide Maßnahmen haben das Ziel, Reste von Stickoxiden aus dem Reaktionsgemisch zu entfernen.

In der Regel fällt das beschriebene Umsetzungsprodukt, insbesondere wenn NO₂ als Stickoxid eingesetzt oder mitverwendet wurde, in Form einer Mischung verschiedener Nitrogruppen enthaltender Alkane an, wobei diese Mischung als Hauptkomponenten die Verbindungen der allgemeinen Formeln I und II 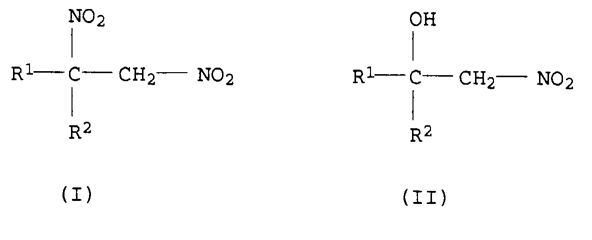 in denen
- R¹: einen langkettigen linearen oder verzweigten Alkylrest mit 8 bis 600, vorzugsweise 22 bis 320, insbesondere 38 bis 240 C-Atomen bezeichnet und
- R²: für Wasserstoff oder C₁- bis C₃-Alkyl steht,
enthält.

Der Rest R¹ entspricht den oben genannten Strukturen für eingesetzten C₂- bis C₆-Olefin-Polymerisate. R² steht vorzugsweise für Wasserstoff, Ethyl und insbesondere Methyl.

Als weitere Komponenten werden hierbei (für den Fall R² = Methyl) oft Verbindungen der allgemeinen Formeln III und IV gefunden:

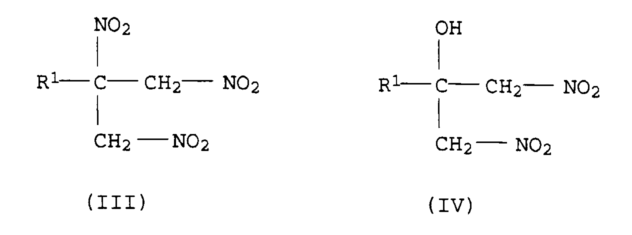

Als Nebenprodukte lassen sich in einigen Fällen - je nach eingesetzten Stickoxiden oder Stickoxid-Sauerstoff-Gemischen - die folgenden Verbindungen V bis VIII nachweisen:

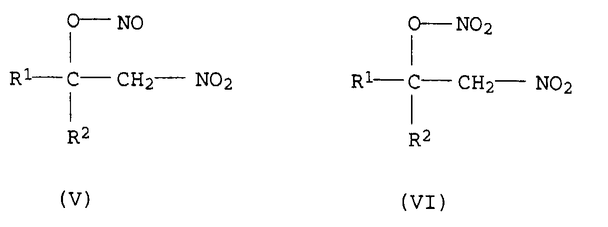

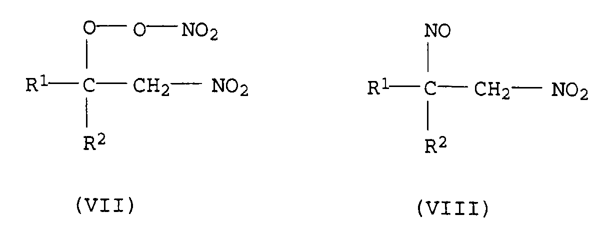

Die Verbindungen I bis IV bilden in der Regel die wesentlichen Komponenten des beschriebenen Umsetzungsproduktes. Die Verbindung I und II machen meist einen Anteil von 25 bis 90 Gew.-%, insbesondere 40 bis 85 Gew.-% des beschriebenen Umsetzungsproduktes aus.

Als weitere Strukturen können die zu den Verbindungen I bis VIII analogen Strukturen IX bis XVI, welche auf Polyolefinen mit β-ständiger Doppelbindung basieren, auftreten:

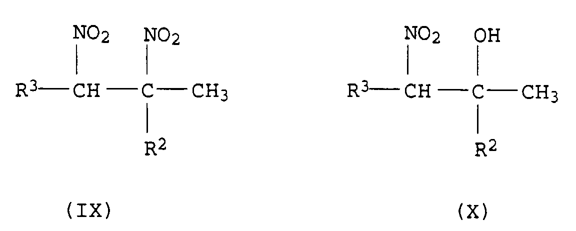

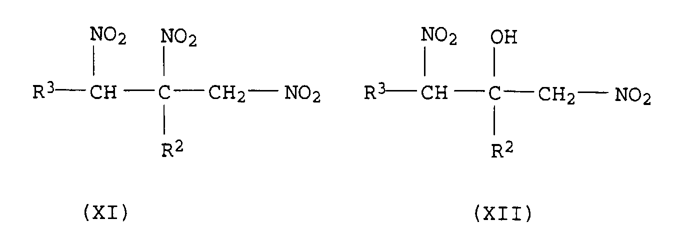

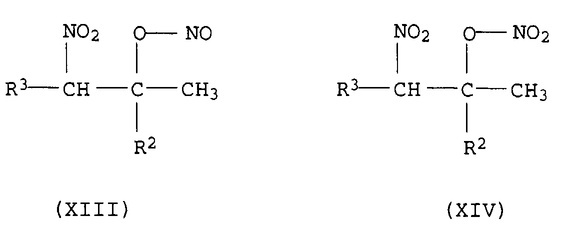

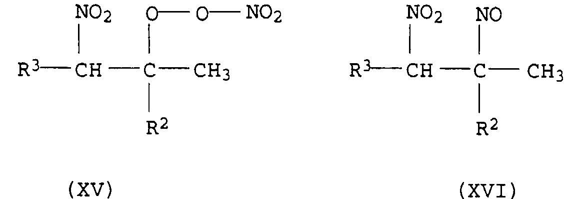

Dabei stellt der Rest R³ einen um ein Kohlenstoffatom oder eine CH₂-Gruppe verkürzten Rest R¹ dar.

Die beschriebenen Umsetzungsprodukte, die Nitroalkane darstellen, werden nach üblichen Methoden zu den entsprechenden Aminoalkanen hydriert, man erhält als Kraft- und Schmierstoffadditive wirksame Verbindungen.

Man gibt die beschriebenen hydrierten Umsetzungsprodukte den Kraftstoffen bevorzugt in einer Menge von 10 bis 5000 ppm, insbesondere 50 bis 1000 ppm zu.

Sollen in erster Linie die dispergierenden Eigenschaften der erfindungsgemäßen Stoffe genutzt werden, so kann man sie auch mit herkömmlichen Detergenzien als zusätzlichen Additiven kombinieren.

Als Detergens-Komponente in der Mischung mit den erfindungsgemäßen Stoffen als Dispergatoren kann prinzipiell jedes bekannte der hierfür geeigneten Produkte eingesetzt werden, wie sie z.B. bei J. Falbe, U. Hasserodt, Katalysatoren, Tenside und Mineralöladditive, G. Thieme Verlag Stuttgart, 1978, S. 223f., oder bei K. Owen, Gasoline and Diesel Fuel Additives, John Wiley & Sons, 1989, S. 23ff., beschrieben sind.

Vorzugsweise verwendet man N-haltige Detergenzien, z.B. Verbindungen, die eine Amin- oder Amid-Gruppe enthalten. Insbesondere geeignet sind Polyisobutylamine gemäß EP-A 0 244 616, Ethylendiamintetraessigsäureamide und/oder -imide gemäß EP-A 0 188 786 oder Polyetheramine gemäß EP-A 0 356 725, wobei auf die Definitionen in diesen Literaturstellen Bezug genommen wird.

Soll in erster Linie die Detergens-Wirkung der beschriebenen Umsetzungsprodukte genutzt werden, so können diese Stoffe auch mit Trägerölen kombiniert werden. Derartige Trägeröle sind bekannt, insbesondere eignen sich Trägeröle auf Polyglykolbasis, z.B. entsprechende Ether und/oder Ester, wie sie in der US-A 5 004 478 oder der DE-A 38 38 918 beschrieben sind. Auch Polyoxyalkylenmonoole mit Kohlenwasserstoffendgruppen (US-A 4 877 416) oder Trägeröle, wie sie in der DE-A 41 42 241 offenbart sind, können eingesetzt werden.

Als Kraftstoffe für Ottomotoren kommen verbleites und insbesondere unverbleites Normal- und Superbenzin in Betracht. Die Benzine können auch andere Komponenten als Kohlenwasserstoffe, z.B. Alkohole wie Methanol, Ethanol oder tert.-Butanol sowie Ether, z.B. Methyl-tert.-butylether, enthalten. Neben den beschriebenen Umsetzungsprodukten enthalten die Kraftstoffe in der Regel noch weitere Zusätze wie Korrosionsinhibitoren, Stabilisatoren, Antioxidantien und/oder weitere Detergentien.

Korrosionsinhibitoren sind meist Ammoniumsalze organischer Carbonsäuren, die durch entsprechende Struktur der Ausgangsverbindungen zur Filmbildung neigen. Auch Amine zur Absenkung des pH-Wertes finden sich häufig in Korrosionsinhibitoren. Als Buntmetallkorrosionsschutz werden meist heterocyclische Aromaten eingesetzt.

Die Prüfung der Produkte auf Eignung als Kraftstoffadditive erfolgte mittels Motorentests; in Prüfstandsversuchen gemäß CEC-F-04-A-87 wurde die keep-clean-Wirkung bei Einlaßventilen (1,2 l-Opel-Kadett-Motor) getestet.

Herstellungsbeispiele der nitrierten zwischen produkte der Erfindung :
Sämtliche Prozentangaben in den Beispielen beziehen sich auf das Gewicht.

### Beispiel 1

In einem Rührkolben wurden 254 g Oligopropen mit einem mittleren Molgewicht von 1168 (P = 28) und einer Bromzahl von 12,6 und 300 g tert.-Butyl-methyl-ether unter Rühren bei 40°C innerhalb 2 h mit 25 g (0,54 Mol) Stickstoffdioxid behandelt. Nach dem Strippen des überschüssigen Stickstoffdioxids mit Stickstoff wurde das Reaktionsgemisch mit 100 g Wasser versetzt und 2 h bei 50-60°C gerührt. Die Phasentrennung ergab 505 g einer organischen Schicht, aus der nach dem Abdestillieren des Lösungsmittels 278 g Produkt erhalten wurde.

Die Elementaranalyse ergab:
80,2 % C; 13,4 % H; 4,5 % O; 1,6 % N.

Das ¹H-NMR-spektrum zeigte als Hauptkomponenten die Verbindungen 1,2-Dinitro-oligo-propan und 1-Nitro-2-hydroxy-oligo-propan im Gew.-Verhältnis 52 : 48.

### Beispiel 2

In einem Rührkolben wurden 720 g Polyisobuten mit einem hohen Anteil an β-ständigen und einem geringen Anteil an endständigen Doppelbindungen (Indopol®H 100; mittleres Molgewicht 930, P = 17; Bromzahl 22,4) und 820 g Mihagol®M (n-Paraffin-Gemisch, C₁₀-C₁₃) gerührt und bei 40°C innerhalb 4 h mit 115 g (2,5 Mol) Stickstoffdioxid behandelt. Nach dem Strippen des überschüssigen Stickstoffdioxids mit Stickstoff wurde das Reaktionsprodukt mit 350 g Wasser versetzt und 3 h bei 60°C gerührt. Nach der Phasentrennung wurde nochmals mit Wasser gerührt und anschließend die organische Phase im Vakuum kurz andestilliert. Man erhielt 1570 g Produkt als klare Lösung. Mittels präparativer Chromatographie wurde ein Umsatz des eingesetzten Polyisobutens von 94 % ermittelt.

Die Elementaranalyse zeigte folgendes Ergebnis:
81 % C; 14,1 % H; 3,0 % O; 1,2 % N.

Wurde die Reaktion in tert.-Butyl-methyl-ether ausgeführt und nach der Aufarbeitung das Lösungsmittel abdestilliert, dann zeigte das lösungsmittelfreie Produkt folgende Analyse:
80,0 % C; 13,4 % H; 4,7 % O; 2 % N.

### Beispiel 3

In einem Rührkolben wurden 500 g Copolymer aus 70 % Isobuten und 30 % 1,3-Butadien (mittleres Molgewicht 700, Bromzahl 60) und 890 g tert.-Butyl-methyl-ether gerührt und bei 30 bis 48°C innerhalb 2,5 h mit 240 g (5,2 Mol) Stickstoffdioxid behandelt. Nach dem Strippen des überschüssigen Stickstoffdioxids mit Stickstoff wurde die Reaktionsproduktlösung mit 700 g Wasser versetzt und 3 h bei 55°C gerührt. Die Phasentrennung ergab 1449 g einer organischen Schicht, aus der nach dem Abdestillieren des Lösungsmittels 645 g Produkt erhalten wurde. Die Elementanalyse ergab:
69,5 % C; 10,5 % H; 14,4 % O; 5,4 % N.

## Patentansprüche

1. Umsetzungsprodukte aus Polymerisaten von Propen, 1-Buten, 2-Buten, Isobuten, 1,3-Butadien oder Mischungen hieraus oder von Isobuten, wobei bis zu 50 Gew.-% des Isobutens durch andere C₂- bis C₆-Olefine als Comonomere ersetzt sein können, mit einem mittleren Polymerisationsgrad P = 5 bis 100 und Stickoxiden oder Gemischen aus Stickoxiden und Sauerstoff, welche im Anschluß an ihre Bildung durch Hydrierung hauptsächlich in Aminoalkane der Strukturen XIX, XXI, XXIII und/ oder XXV 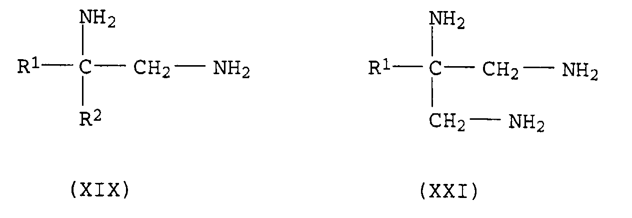 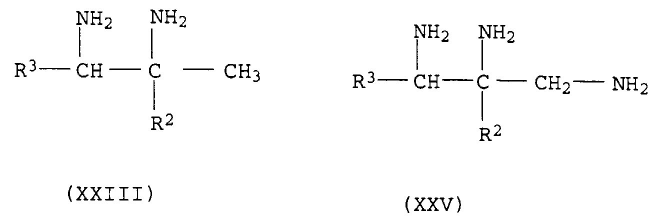 umgewandelt worden sind, wobei
R¹ einen langkettigen linearen oder verzweigten Alkylrest mit 8 bis 600 C-Atomen bezeichnet,
R² für Wasserstoff oder C₁- bis C₃-Alkyl steht und
R³ einen um ein Kohlenstoffatom oder eine CH₂-Gruppe verkürzten Rest R¹ darstellt.

2. Verfahren zur Herstellung von Aminoalkanen der Strukturen XIX, XXI, XXIII und/oder XXV gemäß Anspruch 1, dadurch gekennzeichnet, daß man Umsetzungsprodukte aus Polymerisaten von Propen, 1-Buten, 2-Buten, Isobuten, 1,3-Butadien oder Mischungen hieraus oder von Isobuten, wobei bis zu 50 Gew.-% des Isobutens durch andere C₂- bis C₆-Olefine als Comonomere ersetzt sein können, mit einem mittleren Polymerisationsgrad P = 5 bis 100 und Stickoxiden oder Gemischen aus Stickoxiden und Sauerstoff im Anschluß an ihre Bildung hydriert.

3. Verwendung von Umsetzungsprodukten gemäß Anspruch 1 als Additive für Kraftstoffe und Schmierstoffe.

4. Kraftstoffe für Ottomotoren, enthaltend wirksame Mengen von Umsetzungsprodukten gemäß Anspruch 1.

5. Schmierstoffe, enthaltend wirksame Mengen von Umsetzungsprodukten gemäß Anspruch 1.

## Claims

1. A reaction product of polymers of propene, 1-butene, 2-butene, isobutene, 1,3-butadiene or mixtures thereof or of isobutene, where up to 50% by weight of the isobutene may be replaced by other C₂-C₆-olefins as comonomers, having an average degree of polymerization P of from 5 to 100, and oxides of nitrogen or mixtures of oxides of nitrogen and oxygen, which have been converted mainly into aminoalkanes of the structures XIX, XXI, XXIII and/or XXV 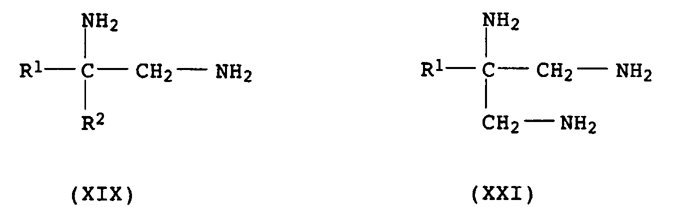 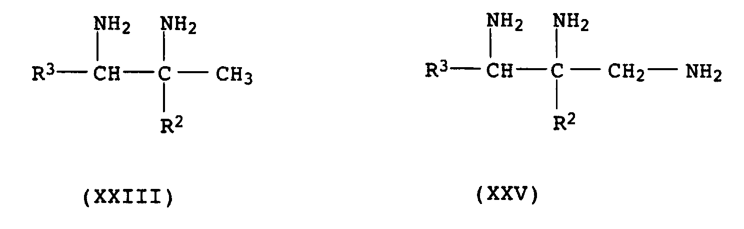 where
R¹ is a long-chain linear or branched alkyl radical of 8 to 600 carbon atoms,
R² is hydrogen or C₁-C₃-alkyl and
R³ is a radical R¹ shortened by a carbon atom or by a CH₂ group,
after their formation by hydrogenation.

2. A process for the preparation of aminoalkanes of the structures XIX, XXI, XXIII and/or XXV as claimed in claim 1, wherein reaction products of polymers of propene, 1-butene, 2-butene, isobutene, 1,3-butadiene or mixtures thereof or of isobutene, where up to 50% by weight of the isobutene may be replaced by other C₂-C₆-olefins as comonomers, having an average degree of polymerization P of from 5 to 100, and oxides of nitrogen or mixtures of oxides of nitrogen and oxygen are hydrogenated after their formation.

3. The use of reaction products as claimed in claim 1 as additives for fuels and lubricants.

4. A fuel for gasoline engines, containing effective amounts of reaction products as claimed in claim 1.

5. A lubricant containing effective amounts of reaction products as claimed in claim 1.

## Revendications

1. Produits réactionnels à base de polymères de propène, de 1-butène, de 2-butène, d'isobutène, de 1,3-butadiène ou de leurs mélanges ou d'isobutène, où jusqu'à 50% en poids de l'isobutène peut être remplacé par d'autres oléfines en C₂-C₆ en tant que comonomères, ayant un degré de polymérisation moyen P = 5 à 100 et des oxydes d'azote ou des mélanges d'oxydes d'azote et d'oxygène, qui, à la suite de leur synthèse, sont transformés par hydrogénation, pour l'essentiel, en aminoalcanes de structures XIX, XXI, XXIII et/ou XXV 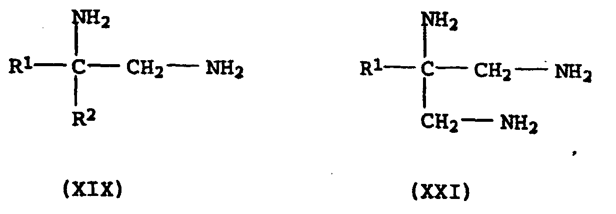 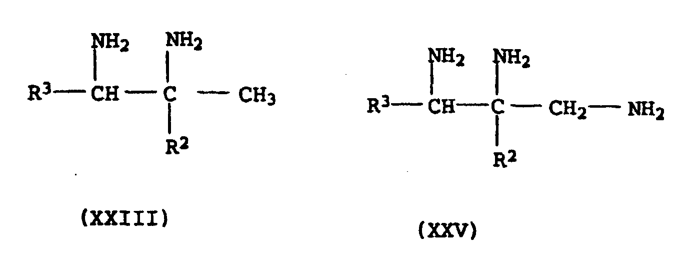 dans lesquelles
R¹ représente un reste alkyle à longue chaîne linéaire ou ramifié ayant 8 à 600 atomes de carbone,
R² représente un atome d'hydrogène ou un groupement alkyle en C₁-C₃ et
R³ représente un reste R¹ amputé d'un atome de carbone ou d'un groupement CH₂.

2. Procédé de préparation d'aminoalcanes de structures XIX, XXI, XXIII et/ou XXV selon la revendication 1, caractérisé en ce que l'on hydrogène à la suite de leur synthèse des produits réactionnels à base de polymères de propène, de 1-butène, de 2-butène, d'isobutène, de 1,3-butadiène ou de leurs mélanges ou d'isobutène, où jusqu'à 50% en poids de l'isobutène peut être remplacé par d'autres oléfines en C₂-C₆ en tant que comonomères, ayant un degré de polymérisation moyen P = 5 à 100 et des oxydes d'azote ou des mélanges d'oxydes d'azote et d'oxygène.

3. Utilisation de produits réactionnels selon la revendication 1 en tant qu'additifs pour des carburants et des lubrifiants.

4. Carburants pour véhicules à moteur, contenant des quantités efficaces de produits réactionnels selon la revendication 1.

5. Lubrifiants, contenant des quantités efficaces de produits réactionnels selon la revendication 1.
